# FASCICULE DE BREVET EUROPEEN

(11) **EP 0 860 313 B1**
(45) Date de publication et mention de la délivrance du brevet: **08.05.2002**
(21) Numéro de dépôt: 98400317.8
(22) Date de dépôt: 11.02.1998
(51) Int. Cl.: B60J 7/20

(54) **Dispositif pour commander l'ouverture et la fermeture de la malle arrière et de la plage arrière d'un véhicule découvrable**
Steuervorrichtung zur Öffnung und Schliessung eines hinteren Kofferraums und hinteren Deckels eines Cabriofahrzeugs
Opening and closing control device for rear luggage compartment and rear deck for convertible vehicle

(30) Priorité: 20.02.1997 FR 9702024
(43) Date de publication de la demande: 26.08.1998
(73) Titulaire: Société Européenne de Brevets Automobiles, 75011 Paris (FR)
(72) Inventeur: Guillez, Jean-Marc, 79140 Cirieres (FR)
(74) Mandataire: Keib, Gérard

(56) Documents cités:
- DE-A- 3 743 502
- DE-C- 4 445 941
- US-A- 3 338 624

## Description

La présente invention concerne un dispositif pour commander l'ouverture et la fermeture de la malle arrière et de la plage arrière d'un véhicule découvrable à toit repliable, pour permettre le passage de ce toit vers l'intérieur du coffre arrière et inversement, la malle arrière pouvant s'ouvrir par rotation de l'avant vers l'arrière.

On connaît selon le brevet français FR-A-2 728 199, un dispositif du genre ci-dessus, dans lequel la plage arrière pivote vers l'avant et vers le bas, lorsque le toit est déplacé vers le coffre arrière, après ouverture de la malle arrière de l'avant vers l'arrière.

Un tel dispositif nécessite de nombreuses pièces compliquées articulées les unes aux autres.

Le but de la présente invention est de remédier à cet inconvénient.

Suivant l'invention, ce dispositif est caractérisé en ce qu'il comprend des moyens permettant d'entraîner la rotation de la plage arrière vers l'avant et vers le bas, lors de la rotation de la malle arrière de l'avant vers l'arrière et inversement pour dégager un passage vers l'intérieur du véhicule.

Ainsi, contrairement au dispositif décrit dans le brevet français FR-A-2 728 199, la plage arrière pivote vers l'avant et vers le bas, lors de l'ouverture de la malle arrière.

De ce fait, la plage arrière s'efface complètement pour dégager un passage pour le toit.

D'autres particularités et avantages de l'invention apparaîtront encore dans la description ci-après.

Aux dessins annexés donnés à titre d'exemples non limitatifs:
- la figure 1 est une vue schématique en coupe longitudinale d'un véhicule découvrable équipé d'un dispositif selon l'invention, le toit étant en position normale,
- la figure 2 est une vue analogue à la figure 1, montrant le toit en position repliée dans le coffre,
- la figure 3 est une vue en coupe partielle du coffre arrière du véhicule, montrant la plage arrière et la malle arrière en position fermée,
- la figure 4 est une vue en coupe et en perspective de la plage arrière et de la malle arrière montrant le dispositif de commande selon l'invention.

Dans l'exemple de réalisation des figures annexées, on a représenté un dispositif pour commander l'ouverture et la fermeture de la malle arrière 1 et de la plage arrière 2 d'un véhicule découvrable à toit repliable 3, pour permettre le passage de ce toit vers l'intérieur du coffre arrière 4 et inversement.

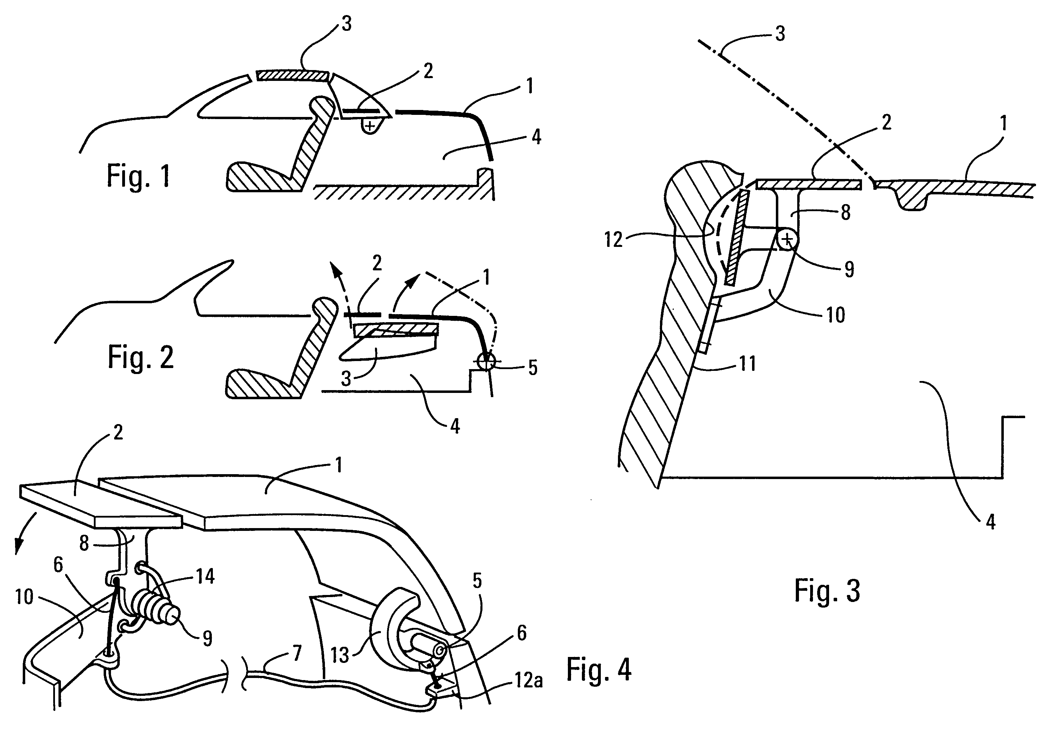

Dans cet exemple, la malle arrière 1 peut s'ouvrir par rotation de l'avant vers l'arrière, comme indiqué sur la figure 2, suivant un axe 5.

Conformément à l'invention, le dispositif comprend des moyens permettant d'entraîner la rotation de la plage arrière 2 vers l'avant et vers le bas, comme indiqué sur les figures 3 et 4, lors de la rotation de la malle arrière 1 de l'avant vers l'arrière et inversement.

Dans la réalisation représentée sur la figure 4, les moyens ci-dessus comprennent une liaison entre la malle arrière 1 et la plage arrière 2 constituée par un câble 6 logé dans une gaine 7.

Comme montré par les figures 3 et 4, la plage arrière 2 est supportée par un élément 8 solidaire de cette plage et fixé de façon articulée suivant un axe 9 à un élément 10 fixé à la tôle de fond 11 du coffre 4.

Cette tôle de fond 11 du coffre comprend, dans sa partie supérieure, en regard de l'articulation 9 entre les deux éléments 8 et 10, une cavité 12 dont la forme est adaptée au mouvement de rotation et à la forme de la plage arrière 2.

Comme on le voit plus précisément sur la figure 4, le mouvement de rotation de la plage arrière 2 vers l'avant est actionné par un câble 6 monté dans une gaine 7 dont les extrémités sont bloquées à l'élément 10 fixé à la tôle de fond 11 du coffre et un élément fixe 12a proche de l'axe d'articulation de la malle 1.

Plus précisément l'extrémité du câble 6 adjacente à l'élément 12a est fixée à un col de cygne 13 qui relie l'articulation 5 à la malle arrière 1.

Par ailleurs, le mouvement de rotation de la plage arrière 2 vers l'arrière est actionné par un ressort 14 monté sur l'axe de rotation 9 de l'élément 8 solidaire de la plage arrière 2 de façon à maintenir le câble 6 sous tension mécanique.

Le dispositif que l'on vient de décrire fonctionne de la façon suivante:

Lorsqu'on veut découvrir le véhicule, on commande, par exemple au moyen d'un moteur électrique, l'ouverture de la malle arrière 1 qui s'ouvre par rotation d'avant vers l'arrière autour de l'axe 5.

Cette rotation de la malle 1 entraîne le câble 6 qui fait pivoter la plage arrière 2 vers l'avant et vers le bas autour de l'axe 9.

La plage arrière 2 vient alors se loger en regard de la cavité 12 ménagée dans la tôle de fond 11.

La malle arrière 2 étant ouverte et la plage arrière étant dégagée, on peut commander le déplacement du toit vers le coffre 4.

Bien entendu l'invention n'est pas limitée à l'exemple de réalisation que l'on vient de décrire et on peut y apporter de nombreuses modifications sans sortir du cadre de l'invention, pour autant que celle-ci soit définie dans les revendications.

## Revendications

1. Dispositif pour commander l'ouverture et la fermeture de la malle arrière (1) et de la plage arrière (2) d'un véhicule découvrable à toit repliable (3), pour permettre le passage de ce toit vers l'intérieur du coffre arrière (4) et inversement, la malle arrière (1) pouvant s'ouvrir par rotation de l'avant vers l'arrière **caractérisé en ce qu'**il comprend des moyens (6, 7) permettant d'entraîner la rotation de la plage arrière (2) vers l'avant et vers le bas, lors de la rotation de la malle arrière (1) de l'avant vers l'arrière pour dégager un passage vers l'intérieur du véhicule et inversement.

2. Dispositif conforme à la revendication 1, **caractérisé en ce que** lesdits moyens comprennent une liaison entre la malle arrière (1) et la plage arrière (2) constituée par un câble (6) logé dans une gaine (7).

3. Dispositif conforme à l'une des revendications 1 ou 2, **caractérisé en ce que** la plage arrière (2) est supportée par un élément (8) solidaire de cette plage et fixé de façon articulée à un élément (10) fixé à la tôle de fond (11) du coffre (4).

4. Dispositif conforme à la revendication 3, **caractérisé en ce que** la tôle de fond (11) du coffre (4) comprend en regard de l'articulation (9) entre les deux éléments (8, 10) une cavité (12) dont la forme est adaptée au mouvement de rotation et à la forme de la plage arrière (2).

5. Dispositif conforme à l'une des revendications 3 ou 4, **caractérisé en ce que** le mouvement de rotation de la plage arrière (2) vers l'avant est actionné par un câble (6) monté dans une gaine (7) dont les extrémités sont bloquées à l'élément (10) fixé à la tôle de fond (11) du coffre et un élément (12a) fixe, proche de l'axe d'articulation (5) de la malle arrière.

6. Dispositif conforme à la revendication 5, **caractérisé en ce que** le mouvement de rotation de la plage arrière (2) vers l'arrière est actionné par un ressort (14) monté sur l'axe de rotation (9) de l'élément (8) solidaire de la plage arrière (2) de façon à maintenir le câble (6) sous tension mécanique.

## Claims

1. A device for controlling the opening and closing of the boot lid (1) and of the parcel shelf (2) of a convertible-type vehicle with folding roof (3), so as to allow this roof to move towards the interior of the boot (4) and vice versa, the boot lid (1) being opened by rotation from the front towards the rear, **characterized in that** it includes means (6, 7) allowing the parcel shelf (2) to be rotated forwards and downwards when the boot lid (1) is rotated from the front towards the rear and vice versa so as to clear a way towards the interior of the vehicle.

2. A device according to Claim 1, **characterized in that** said means include a link between the boot lid (1) and the parcel shelf (2) consisting of a cable (6) housed in a casing (7).

3. A device according to one of Claims 1 or 2, **characterized in that** the parcel shelf (2) is supported by an element (8), which is firmly attached to said shelf and is fixed in an articulated manner to an element (10) fixed to the back plate (11) of the boot (4).

4. A device according to Claim 3, **characterized in that** the back plate (11) of the boot (4) includes, opposite the articulation (9) between the two elements (8, 10), a cavity (12), the shape of which is adapted to the rotational movement and to the shape of the parcel shelf (2).

5. A device according to one of Claims 3 or 4, **characterized in that** the rotational forward movement of the parcel shelf (2) is activated by a cable (6) fitted in a casing (7), the ends of which are clamped to the element (10), which is fixed to the back plate (11) of the boot, and a fixed element (12a), close to the axis of articulation (5) of the boot lid.

6. A device according to Claim 5, **characterized in that** the rotational movement of the parcel shelf (2) towards the rear is activated by a spring (14) fixed on the axis of rotation (9) of the element (8), which is firmly attached to the parcel shelf (2), in such a way as to hold the cable (6) under mechanical tension.

## Patentansprüche

1. Vorrichtung zur Steuerung des Öffnens und des Schließens des hinteren Kofferraumdeckels (1) und des hinteren Bereiches (2) eines Cabriofahrzeugs mit zusammenfaltbarem Dach (3), um die Bewegung dieses Daches in den Innenraum des hinteren Kofferraums (4) und umgekehrt zu ermöglichen, wobei sich der hintere Kofferraumdeckel (1) durch Drehung von vorne nach hinten öffnen lässt, **dadurch gekennzeichnet, dass** sie Einrichtungen (6, 7) aufweist, die ermöglichen, während der Drehung des hinteren Kofferraumdeckels (1) von vorne nach hinten und umgekehrt, die Drehung des hinteren Bereiches (2) nach vorne und nach unten anzutreiben, um einen Durchgang zu dem Innenraum des Fahrzeugs freizulegen.

2. Vorrichtung gemäß Anspruch 1, **dadurch gekennzeichnet, dass** die Einrichtungen eine Verbindung zwischen dem hinteren Kofferraumdeckel (1) und dem hinteren Bereich (2) umfassen, die aus einem in einer Umhüllung (7) gelagerten Kabel (6) besteht.

3. Vorrichtung gemäß einem der Ansprüche 1 oder 2, **dadurch gekennzeichnet, dass** der hintere Bereich (2) von einem einstückig mit diesem Bereich ausgebildeten Element (8) getragen wird, das schwenkbar an einem Element (10) befestigt ist, welches an dem Bodenblech (11) des Kofferraums (4) befestigt ist.

4. Vorrichtung gemäß Anspruch 3, **dadurch gekennzeichnet, dass** das Bodenblech (11) des Kofferraums (4) gegenüber der Gelenkverbindung (9) zwischen den beiden Elementen (8, 10) einen Hohlraum (12) aufweist, dessen Form der Drehbewegung und der Form des hinteren Bereiches (2) angepasst ist.

5. Vorrichtung gemäß einem der Ansprüche 3 oder 4, **dadurch gekennzeichnet, dass** die Drehbewegung des hinteren Bereiches (2) nach vorne von einem Kabel (6) angetrieben wird, das in einer Umhüllung (7) gelagert ist, deren Enden an dem Element (10), das an dem Bodenblech (11) des Kofferraums befestigt ist, und an einem festen Element (12a), das sich nahe der Schwenkachse (5) des hinteren Kofferraumdeckels (1) befindet, befestigt sind.

6. Vorrichtung gemäß Anspruch 5, **dadurch gekennzeichnet, dass** die Drehbewegung des hinteren Bereiches (2) nach hinten von einer Feder (14) angetrieben wird, welche auf der Drehachse (9) des einstückig mit dem hinteren Bereich (2) ausgebildeten Elementes (8) derart angebracht ist, dass sie das Kabel (6) unter mechanischer Spannung hält.
